# DEMANDE DE BREVET EUROPEEN

(11) **EP 1 072 374 A1**
(43) Date de publication de la demande: **31.01.2001**
(21) Numéro de dépôt: 00401909.7
(22) Date de dépôt: 04.07.2000
(51) Int. Cl.: B29C 44/04, B29C 33/00

(54) **Procédé de fabrication de pièces en matière plastique cellulaire et pièces ainsi obtenues**

(30) Priorité: 23.07.1999 FR 9909593
(71) Demandeur: LE JOINT FRANCAIS, 75008 Paris (FR)
(72) Inventeur: Stassen, Pierre, 22100 Dinan (FR); Le Gall, Yves, 22190 Plerin (FR)
(74) Mandataire: Doireau, Marc

(57) **Abrégé**

L'invention concerne un procédé de fabrication d'une pièce (P) en matière plastique cellulaire, réalisée en une seule pièce et en une seule matière en réalisation une succession d'opérations de thermocompression à partir d'une ébauche (E) de densité constante et de poids égal à celui de la pièce finie pour obtenir une pièce comprenant des zones différentes (10,12,14,16) ayant des densités différentes et aptes à remplir des fonctions différentes, caractérisé en ce qu'il consiste, au cours de chaque opération de thermocompression, à comprimer au moins une zone de la pièce à un taux de compression donné pour provoquer un transfert de matière vers au moins une autre zone de la pièce afin d'y acheminer tout ou partie de la quantité de matière qui est nécessaire à l'obtention de sa densité souhaitée, et à isoler toute zone de la pièce ayant la densité souhaitée avant de procéder à l'opération de thermocompression suivante pour éviter tout transfert de matière vers cette zone.

## Description

L'invention concerne des perfectionnements apportés à un procédé de fabrication de pièces en matière plastique cellulaire, notamment en matière thermoplastique, réalisées en une seule pièce avec une densité de matière variable.

On connaît du document EP-A-0 633 114 un procédé de fabrication d'une pièce en matière plastique cellulaire réalisée en une seule pièce par thermocompression d'une ébauche en matière plastique cellulaire à densité sensiblement uniforme, et à modifier localement la densité de l'ébauche au cours des opérations de thermocompression au moyen d'un outillage tel que des tiroirs coulissants pour obtenir dans la pièce finale des parties ou zones ayant des densités différentes.

D'une manière générale, ces zones de densités différentes sont réalisées dans le but de remplir des fonctions différentes, comme par exemple des moyens de filtrage de fluide, des moyens d'apport de liquide, du lubrifiant par exemple, des moyens d'amortissement et d'absorption de vibrations, une garniture d'étanchéité, un palier de guidage et/ou des moyens de support, de positionnement ou de fixation, ...

Un but de l'invention est de perfectionner le procédé précité pour réaliser avec un même outillage des pièces en matière plastique cellulaire présentant des zones de densités différentes, chaque zone ayant une fonction propre et, par conséquent, des caractéristiques physiques propres, cela à partir d'un seul matériau de base.

A cet effet, l'invention propose un procédé de fabrication d'une pièce en matière plastique cellulaire, réalisée en une seule pièce et en une seule matière en réalisant une succession d'opérations de thermocompression à partir d'une ébauche de densité constante et de poids égal à celui de la pièce finie pour obtenir une pièce comprenant des zones différentes ayant des densités différentes et aptes à remplir des fonctions différentes, caractérisé en ce qu'il consiste, au cours de chaque opération de thermocompression, à comprimer au moins une zone de la pièce à un taux de compression donné pour provoquer un transfert de matière vers au moins une autre zone de la pièce afin d'y acheminer tout ou partie de la quantité de matière qui est nécessaire à l'obtention de sa densité souhaitée, et à isoler toute zone de la pièce ayant la densité souhaitée avant de procéder à l'opération de thermocompression suivante pour éviter tout transfert de matière vers cette zone.

Le procédé peut également consister à isoler momentanément au moins une zone précomprimée pendant une opération de thermocompression, et à la comprimer à la densité souhaitée au cours d'une ou de plusieurs opérations de thermocompression ultérieures.

D'une manière générale, les opérations de thermocompression sont réalisées dans un ordre prédéterminé en fonction des densités souhaitées pour les différentes zones de la pièce, par exemple dans l'ordre croissant de leurs densités, sachant que cet ordre est notamment dicté par les positions des zones les unes par rapport aux autres.

A titre d'exemple, on peut réaliser une pièce avec des zones ayant des densités allant de 0,05 à 0,9 à partir d'une ébauche de densité de l'ordre de 0,03, et à appliquer des taux de compression de l'ordre de 1,6 à 30 en effectuant des opérations de thermocompression à une température de l'ordre de 180°C à 200°C et à une pression pouvant atteindre une valeur de l'ordre de 100 bars.

A titre d'exemple, le procédé selon l'invention permet de réaliser une pièce formant un palier auto-lubrifiant comprenant au moins une zone formant corps de guidage, des zones formant des réserves de lubrifiant et des zones formant des lèvres d'étanchéité, le procédé consistant à effectuer une première opération de thermocompression à un premier taux de compression permettant de réaliser les zones formant les réserves de lubrifiant et de pré-comprimer les autres zones, à isoler lesdites zones formant les réserves de lubrifiant, à effectuer une deuxième opération de thermocompression à un deuxième taux de compression pour réaliser la zone formant le corps de guidage et pré-comprimer les zones destinées à former les lèvres d'étanchéité, à isoler ladite zone formant le corps de guidage, et à effectuer une troisième opération de thermocompression à un troisième taux de compression pour obtenir les zones formant les lèvres d'étanchéité.

D'une manière générale, les opérations de thermocompression sont réalisées au moyen d'un moule comprenant des tiroirs coulissants répartis autour d'une ébauche et qui sont mobiles suivant des directions différentes.

D'autres avantages, caractéristiques et détails de l'invention ressortiront du complément de description qui va suivre en référence à des dessins annexés, donnés uniquement à titre d'exemple et dans lesquels :
- la figure 1 est une vue en perspective coupée d'une pièce formant un palier auto-lubrifiant obtenu selon le procédé selon l'invention ;
- la figure 2 est une vue en perspective schématique pour illustrer les tiroirs d'un moule utilisé pour fabriquer la pièce représentée sur la figure 1 ;
- les figures 3 à 7 reprennent en partie les tiroirs du moule de la figure 2 pour illustrer les différentes étapes de fabrication de la pièce représentée sur la figure 1, et
- la figure 8 est un schéma synoptique pour illustrer les différentes étapes de fabrication d'une autre pièce que celle illustrée sur la figure 1.

Les pièces selon l'invention sont réalisées en matière plastique cellulaire, notamment en matière thermoplastique, telle par exemple un polyéther, un polyesther, un polyuréthanne ou encore un élastomère vulcanisable.

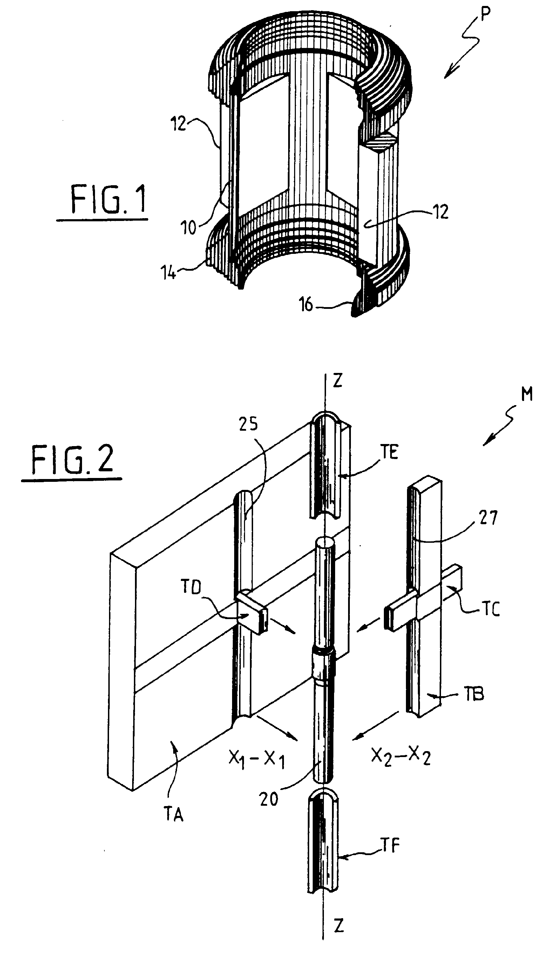

La pièce P illustrée sur la figure 1 est réalisée d'un seul tenant en une matière unique, et elle est de forme générale cylindrique tubulaire. Concrètement, elle représente un palier auto-lubrifiant qui comprend plusieurs zones ayant des densités et des fonctions différentes, à savoir :
- une zone centrale 10 qui forme un corps de guidage ;
- des zones périphériques 12 de réserve de lubrifiant qui sont en saillie et régulièrement réparties autour de la zone centrale 10, et
- aux deux parties d'extrémité axiales de la zone centrale 10, une zone 14 formant une portée de montage et une zone 16 formant une lèvre d'étanchéité.

Dans cet exemple, la pièce P doit être réalisée avec les densités suivantes : de l'ordre de 0,1 pour les zones 12 de réserve de lubrifiant, de l'ordre de 0,7 pour les zones 14 formant les portées de montage, de l'ordre de 0,8 pour la zone centrale 10 formant le corps de guidage et de l'ordre de 0,9 pour les zones 16 formant les lèvres d'étanchéité.

Cette pièce P est par exemple fabriquée en mousse de polyuréthanne de densité de l'ordre de 0,03 à partir d'une ébauche tubulaire E ayant ladite densité et un poids égal à celui de la pièce P finie.

La pièce P est réalisée par une succession d'opérations de thermocompression dans un moule M qui est illustré à la figure 2.

Plus précisément, le moule M comprend une tige centrale de support fixe 20 d'axe Z-Z sur laquelle vient se monter l'ébauche tubulaire E, le diamètre de la tige 20 correspondant au diamètre intérieur de la pièce P, et un ensemble de tiroirs mobiles qui, pour réaliser la pièce P, sont au nombre de dix.

Plus précisément, le moule M comprend :
- deux tiroirs TA diamétralement opposés qui sont mobiles suivant un axe X₁-X₁ perpendiculaire à l'axe Z-Z ;
- deux tiroirs TB diamétralement opposés qui sont mobiles suivant un axe X₂-X₂ perpendiculaire à l'axe X₁-X₁ ;
- deux tiroirs TC diamétralement opposés qui sont respectivement supportés de manière coulissante par les deux tiroirs TB et mobiles suivant le même axe X₂-X₂ ;
- deux tiroirs TD diamétralement opposés qui sont respectivement supportés de manière coulissante par les deux tiroirs TC et mobiles suivant le même axe X₁-X₁, et
- deux tiroirs TE et TF axialement alignés avec la tige de support 20, situés de part et d'autre de celle-ci et mobiles suivant l'axe Z-Z.

D'une manière générale, le moule M a été représenté à l'état ouvert sur la figure 2 et, pour des raisons de simplification et de clarté, les tiroirs TE et TF ont été représentés en coupe, alors que les tiroirs symétriques des tiroirs TA, TB, TC et TD n'ont pas été représentés.

Les tiroirs TA et TB présentent chacun une empreinte thermoformante 25 située en regard de la tige de support 20 et qui s'étend parallèlement à l'axe Z-Z sur une longueur supérieure à celle de la pièce P.

Les tiroirs TC et TD présentent chacun une empreinte thermoformante 27 située en regard de la tige de support 20 et qui s'étend parallèlement à l'axe Z-Z sur une longueur correspondant à celle de la zone centrale 10 qui doit former le corps de guidage de la pièce P.

Les deux tiroirs Te et TF sont constitués par deux éléments tubulaires destinés à venir coulisser sur la tige de support 20 et dont les faces d'extrémité circulaires en regard l'une de l'autre sont conformées pour donner la forme souhaitée aux zones d'extrémité 14 et 16 de la pièce P.

D'une manière générale, les empreintes 25 et 27 des tiroirs TA et TB d'une part et des tiroirs TC et TD d'autre part, ont une forme convexe avec un rayon de courbure qui correspond au diamètre extérieur des zones qu'elles doivent former à la densité souhaitée.

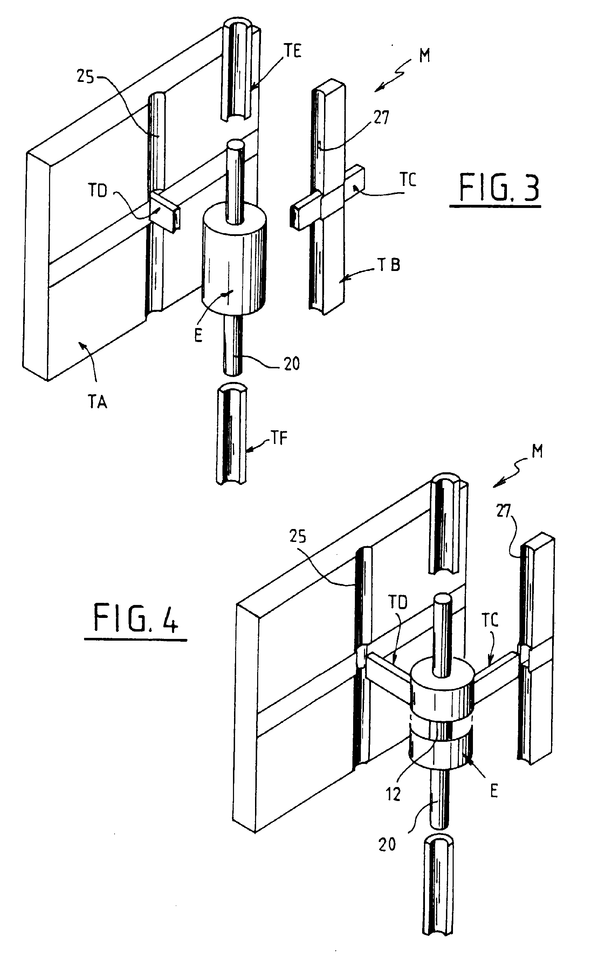

Les opérations de thermocompression pour fabriquer la pièce P vont être décrites ci-après en référence aux figures 3 à 7.

Au départ, comme illustré sur la figure 3, l'ébauche E est montée sur la tige de support 20 et tous les tiroirs TA à TF sont tous dans une position éloignée par rapport à l'ébauche E, le moule M est à l'état ouvert.

Dans une première opération de thermocompression (figure 4), seuls les quatre tiroirs TC et TD sont déplacés contre l'ébauche E pour appliquer un taux de compression donné sur la zone centrale 10 de manière à former et à isoler les zones périphériques 12 de réserve de lubrifiant.

Plus précisément, les tiroirs TC et TD viennent s'appliquer sur la zone centrale 10 autour des zones périphériques 12. La compression ainsi appliquée provoque un transfert de matière vers toutes les autres zones de la pièce P. Ce transfert de matière vers les zones périphériques 12 est tel que l'on peut obtenir la densité souhaité de l'ordre de 0,1 en appliquant un taux de compression approprié.

Autrement dit, un transfert de matière vers une zone de la pièce peut être suffisant pour obtenir la densité souhaitée, alors que la compression est en fait appliquer sur une autre zone de la pièce.

Les quatre tiroirs TC et TD sont ensuite maintenus immobiles pendant toutes les autres opérations de thermocompression pour isoler les zones périphériques 12 qui ont la densité souhaitée.

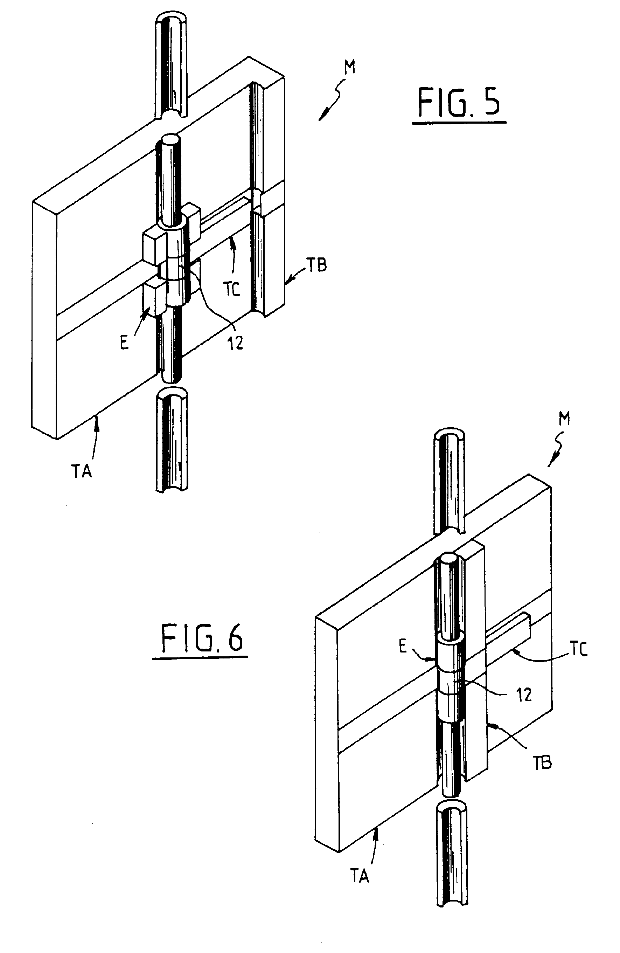

Dans une deuxième opération de thermocompression (figure 5), les deux tiroirs TA sont déplacés en direction de l'ébauche E pour lui appliquer un taux de compression donné pour pré-comprimer toutes les zones de l'ébauche sauf les zones périphériques 12 de réserve de lubrifiant.

Dans une troisième opération de thermocompression (figure 6), les deux tiroirs TB sont déplacés en direction de l'ébauche E pour lui appliquer un taux de compression donné pour comprimer à la densité souhaitée la zone centrale 10 qui forme le corps de guidage, et pour pré-comprimer les zones 14 et 16 destinées à former les portées de montage et les lèvres d'étanchéité. Les tiroirs TA et TB sont immobilisés pendant toutes les autres opérations de thermocompression de manière à isoler la zone centrale 10 qui a la densité souhaitée.

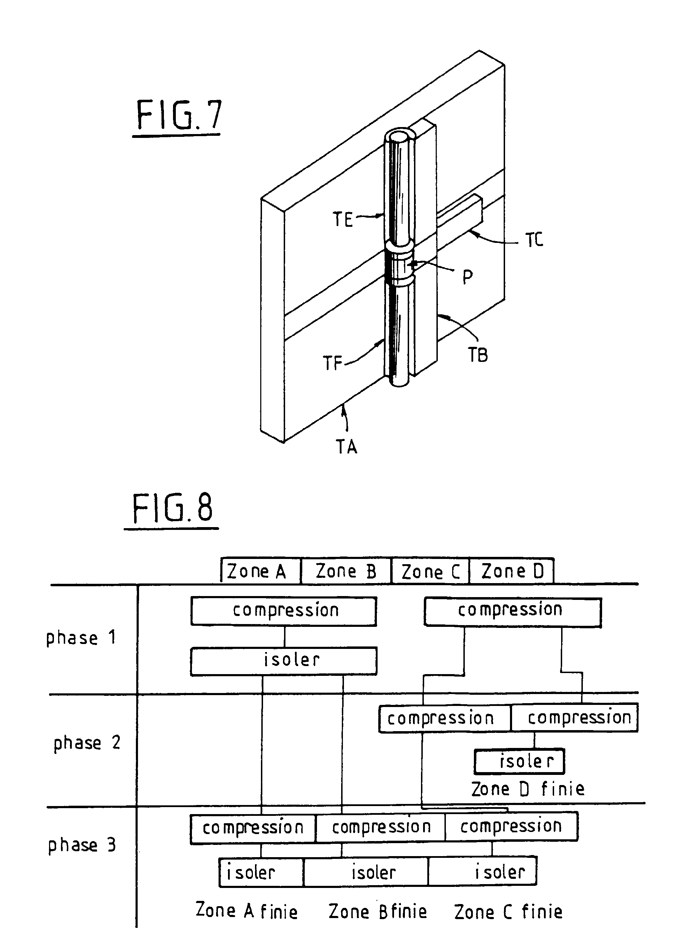

Dans une quatrième opération de thermocompression (figure 7), les deux tiroirs TE et TF sont déplacés l'un vers l'autre en direction de l'ébauche E et suivant l'axe Z-Z, pour appliquer un taux de compression donné aux deux parties d'extrémité axiale de l'ébauche E et former à la densité souhaitée les zones 14 formant les portées de montage d'une part, et les zones 16 formant les lèvres d'étanchéité d'autre part.

Après cette quatrième opération de thermocompression, tous les tiroirs sont reculés, et l'ébauche E de la figure 3 a pris la forme finale de la pièce P illustrée sur la figure 1.

Sur la figure 8, on a illustré un schéma synoptique de la mise en oeuvre du procédé selon l'invention pour réaliser une pièce qui présente par exemple quatre zones A, B, C et D ayant des densités différentes.

Dans une première phase, on effectue une opération de thermocompression qui pré-compriment les quatre zones A, B, C et D, les zones A et B étant ensuite isolées bien que n'ayant pas encore leurs densités souhaitées.

Dans une deuxième phase, on effectue une deuxième opération de thermocompression qui permet de pré-comprimer la zone C et de comprimer la zone D à la densité souhaitée, cette zone D étant ensuite isolée.

Enfin, dans une troisième phase, les zones A et B n'étant plus isolées, on effectue une troisième opération de thermocompression pour comprimer les zones A, B et C à leurs densités souhaitées pour obtenir la pièce finale.

Ce schéma synoptique montre ainsi qu'une zone d'une pièce peut être momentanément isolée au cours du processus de fabrication.

## Revendications

1. Procédé de fabrication d'une pièce en matière plastique cellulaire, réalisée en une seule pièce et en une seule matière en réalisation une succession d'opérations de thermocompression à partir d'une ébauche de densité constante et de poids égal à celui de la pièce finie pour obtenir une pièce comprenant des zones différentes ayant des densités différentes et aptes à remplir des fonctions différentes, caractérisé en ce qu'il consiste, au cours de chaque opération de thermocompression, à comprimer au moins une zone de la pièce à un taux de compression donné pour provoquer un transfert de matière vers au moins une autre zone de la pièce afin d'y acheminer tout ou partie de la quantité de matière qui est nécessaire à l'obtention de sa densité souhaitée, et à isoler toute zone de la pièce ayant la densité souhaitée avant de procéder à l'opération de thermocompression suivante pour éviter tout transfert de matière vers cette zone.

2. Procédé selon la revendication 1, caractérisé en ce qu'il consiste également à isoler au moins une zone précomprimée pendant une opération de thermocompression, et à la comprimer à la densité souhaitée au cours d'une opération de thermocompression ultérieure.

3. Procédé selon la revendication 1 ou 2, caractérisé en ce qu'il consiste à effecteur les opérations de thermocompression dans un ordre prédéterminé en fonction des densités souhaitées pour les différentes zones de la pièce et des positions de ces zones les unes par rapport aux autres.

4. Procédé selon la revendication 3, caractérisé en ce qu'il consiste à réaliser les différentes zones de la pièce dans l'ordre croissant de leurs densités.

5. Procédé selon l'une quelconque des revendications précédentes, caractérisé en ce qu'il consiste à réaliser une pièce avec des zones ayant des densités allant de 0,05 à 0,9 à partir d'une ébauche de densité de l'ordre de 0,03 et à appliquer des taux de compression de l'ordre de 1,6 à 30.

6. Procédé selon l'une quelconque des revendications précédentes, caractérisé en ce qu'il consiste à réaliser des opérations de thermocompression à une température de l'ordre de 180°C à 200°C et à une pression pouvant atteindre une valeur de l'ordre de 100 bars.

7. Procédé selon l'une quelconque des revendications précédentes, caractérisé en ce qu'il consiste, pour réaliser une pièce formant un palier auto-lubrifiant comprenant au moins une zone formant un corps de guidage, des zones formant des réserves de lubrifiant et des zones formant des lèvres d'étanchéité, à effectuer une première opération de thermocompression à un premier taux de compression permettant de réaliser les zones formant les réserves de lubrifiant et de pré-comprimer les autres zones, à isoler lesdites zones formant les réserves de lubrifiant, à effectuer une deuxième opération de thermocompression à un deuxième taux de compression permettant de réaliser la zone formant le corps de guidage et de pré-comprimer les zones formant les lèvres d'étanchéité, à isoler ladite zone formant le corps de guidage, et à effectuer une troisième opération de thermocompression à un troisième taux de compression permettant d'obtenir les zones formant les lèvres d'étanchéité.

8. Procédé selon la revendication 7, caractérisé en ce qu'il consiste à réaliser ladite pièce formant un palier auto-lubrifiant avec des réserves de lubrifiant ayant une densité de l'ordre de 0,1, un corps de guidage ayant une densité de l'ordre de 0,8 et des lèvres d'étanchéité ayant une densité de l'ordre de 0,9.

9. Procédé selon la revendication 7 ou 8, caractérisé en ce qu'il consiste à réaliser les opérations de thermocompression au moyen de tiroirs coulissants répartis autour de l'ébauche et mobiles suivant des directions différentes et à utiliser ces tiroirs non seulement pour appliquer un taux de compression donné mais également pour isoler une zone de la pièce ayant la densité souhaitée.
